# EUROPÄISCHE PATENTANMELDUNG

(11) **EP 1 378 339 A1**
(43) Veröffentlichungstag der Anmeldung: **07.01.2004**
(21) Anmeldenummer: 03000405.5
(22) Anmeldetag: 10.01.2003
(51) Int. Cl.: B29C 70/68, B29C 65/72, B29C 44/12, B29C 45/14, B29C 65/48, B29C 65/58, B60R 13/02

(54) **Vorrichtung und Verfahren zur Herstellung mehrfarbiger Slushhäute**

(30) Priorität: 02.07.2002 EP 02014658
(71) Anmelder: Peguform GmbH & Co. KG, 79268 Bötzingen (DE)
(72) Erfinder: Wolfgramm, Peter, 93333 Bad Gögging (DE)

(57) **Zusammenfassung**

In einem ersten Schritt werden verschiedene Formhäute (1,2) mit verschiedenen Farben und Oberflächenstrukturen in Slushtechnik hergestellt. Diese Formhäute (1,2) werden dann formschlüssig verbunden, damit exakte Fugenbilder dargestellt werden können. Dann erst werden die beiden Formhäute in einem Fügwerkzeug gefügt, und zwar beispielsweise durch Schweißen, Kleben. Die so verbundenen Formhäute (1,2) werden dann in ein gemeinsames Schäumwerkzeug eingelegt und mit einem Träger verschäumt. Alternativ kann man die Formhäute direkt hinterspritzen oder hinterpressen.

## Beschreibung

Bei der Herstellung von Formhäuten für dekorative Oberflächen vorzugsweise im Fahrzeuginnenräum war man bisher hauptsächlich auf einfärbige Formhäute beschränkt. Nach der Lehre dieser Erfindung ist es möglich, verschiedenfärbige, ja sogar vom Material her verschiedenartige, Formhäute oder Folien zu kombinieren. In einem ersten Schritt werden verschiedene Formhäute mit verschiedenen Färben und Oberflächenstrukturen in Slushtechnik hergestellt. Diese Formhäute werden dann formschlüssig verbunden, damit exakte Fugenbilder dargestellt werden können. Dann erst werden die beiden Formhäute in einem Fügwerkzeug gefügt, und zwar beispielsweise durch Schweißen oder Kleben. Die so verbundenen Formhäute werden dann in ein gemeinsames Schäumwerkzeug eingelegt und mit einem Träger verschäumt. Alternativ kann man die Formhäute direkt hinterspritzen oder hinterpressen.

Nach der Lehre von DE 42 24 889 werden mehrere verschiedene Schichten im Schmelzverfahren auf einen Kern aufgebracht (aufgeschmolzenes Pulver oder Flüssigkeit) und im letzten Schritt wird durch den Kern Luft geblasen und die verschiedenen Schichten gegen ein Hohlwerkzeug gepresst. Die Erfindung behandelt die Herstellung mehrschichtiger und auch mehrfarbiger Folien aus flüssigem Grundmaterial. Es ist allerdings nicht offenbart, dass mit diesem auch mehrfarbige aneinander anschließende Schichten hergestellt werden können.

Nach der Lehre von können zwei verschiedene Schichten aneinander gefügt werden. In dem in EP0187990 dargestellten Bauteil handelt es sich um ein Bauteil mit einer die vor dem Schäumen montiert wird und dann hinterschäumt wird. Ziel ist die Schaffung eines einteiligen Bauelements, das aus Verkleidungsteil und Formteil besteht. Die Folie selbst wird nicht im Slushverfahren hergestellt, sondern im Sturzgießverfahren. Die Folie ist dabei flüssig, ein sogenannte Plastisol.

Plastisol ist ein flüssiges Material, welches unter Wärmeeinwirkung vernetzt. Es schmilzt nicht wie Pulver im Slushprozeß auf, sondern vernetzt, indem sich die Polymerketten chemisch verbinden.

Zwei Negativhälften bilden eine Form oder auch eine Hohlform, in die das Material eingegeben wird. Dann schließt man die Formen und erwärmt sie dabei. Die Formen drehen sich zweiachsig und des Material verläuft an den Wänden, bis eine Folie entsteht. Danach kühlt man die Form wieder ab und das vemetzte Material ist zu einer Folie "erstarrt". Diese kann dann entnommen/werden. Ein wesentlicher Nachteil dieses Standes der Technik besteht in den ungleichmäßigen Wanddicken. Ein Anwendungsbeispiel für diese Technologie sind auch alle Hohlformen von Schokoladenfiguren.

In Dokument WO0189882 wird ein Formteil beschrieben, welches aus mindestens zwei verschiedenen Formhäuten besteht. Diese Formhäute werden hinterschäumt und mit einem Trägermaterial verbunden. Die beiden Formhäute werden mittels einer Rastverbindung miteinander formschlüssig verbunden. Der große Vorteil dieser Lösung ist die Möglichkeit, Materialien verschiedenen Schmelzpunktes zu verbinden, weil durch. die formschlüssige Verbindung keine Verschmelzung der beiden Materialien erforderlich ist. Außerdem können Materialien mit unterschiedlichem thermischen Ausdehnungskoeffizienten miteinander verbunden werden. Nicht offenbart wird allerdings, wie sich die Verbindung verhält, wenn es durch unterschiedliche Wärmeausdehnung zu Zugspannungen in zumindest einer der Folien kommt oder sich die Toleranz zwischen dem Zapfen und der zugehörigen Nut verändert.

Im Dokument EP0683030 wird eine Tiefziehvorrichtung zur Herstellung eines Formteils aus einer Kunststofffolie Offenbart, welche aus Folienteilen unterschiedlicher Farbe oder Oberflächenstruktur besteht.

Die einzelnen Folienteile werden im Tiefziehverfahren durch eine vorläufige Fügenaht, welche, stumpf, überlappend oder gebördelt sein kann, durch Kleben oder Schweißen miteinander verbunden. Die Folie wird in ein Formwerkzeug 5 eingebracht, erwärmt und unter Vakuum in einen Spalt gezogen, welcher nach unten hin zu einer Nut abgeschlossen ist. Die Folie legt sich an die Konturen dieser Nut an und wird auf Fügetemperatur erhitzt oder an den Fügflächen verklebt. Dabei liegt die vorläufige Fügenaht am Nutgrund. Der Spalt wird verengt, sodass die Fügflächen miteinander verpresst werden, womit eine Fügstelle mit definierter Haltekraft entsteht.

Allerdings gibt diese Lösung keinen Aufschluss darüber, welchen optischen Eindruck der Nahtverlauf auf der Sichtseite bietet, da vor allem beim Kleberauftrag damit gerechnet werden muss; dass der Kleber auf die Sichtseite gelangt, und somit der optische Eindruck der Fügverbindung nicht den Anforderungen für den Fahrzeuginnenraum entspricht.

Ein weiteres Problem der in EP0683030 offenbarten Lösung liegt darin, dass allein für die Verbindung der beiden Folien ein Fügvorgang aus mehreren Prozessschritten erforderlich ist, das bedeutet einmal einen Vorfügvorgang der beiden Folien zur Herstellung einer vorläufigen Fügnaht, Erhitzen der vorgefügten Folien, Auflage auf ein Formwerkzeug, Anlegen eines Vakuums, Ausformung eines Spaltes mit einer Nut, Auftrag eines Klebers in den Spalt oder Erhitzen der Folie im Spalt, Verpressen der Folie durch Verminderung des Abstandes der Spaltwände, Beschneiden des nach der Verpressung als schlauchartiger Wulst vorliegenden Folienteils. Erst danach kann diese Folie in ein Schaumwerkzeug eingelegt werden und mit einem Träger verbunden werden, um fertiges Formteil, wie eine Fahrzeuginnenverkleidung, zu ergeben.

Der Prozessablauf erfordert wesentlich mehr Verfahrensschritte als die erfindungsgemäße Lösung und kann daher aus wirtschaftlichen Gründen nicht für die Lösung des erfihdungsgemässen Problems eingesetzt werden.

Ein weiteres Problem der Anwendung der in EP0683030 offenbarten Lösung besteht darin, dass bei unterschiedlicher Wärmeausdehnung der beiden gefügten Folien es zu Zugspannungen auf die Naht kommen kann, wodurch es zu einer Sichtbarkeit der Fügstelle kommt.

WO9740980 beschreibt ein Fügverfahren von zwei Dekorschichten, welche über je eine Klebeschicht mit einer Trägerschicht verbunden sind. Dieses Fügverfahren betrifft die Verbindung von 2 kompletten Formteilen, nicht von verschiedenen Folien, welche in ein einziges Formteil verarbeitet werden. Die Problematik der Verbindung von zwei Formteilen ist nur bedingt mit der Problematik der Verbindung von zwei Folien vergleichbar, da zum einen die Formteile nicht mehr Temperatur- und oder Druckbelastungen durch nachfolgende Verarbeitungsschritte ausgesetzt sind, zum anderen es bei der Herstellung einer formschönen Naht, darauf ankommt, dass die Fertigungstoleranzen der Verbindungsmechanismen aufeinander abgestimmt sind. Nur wenn die Maßtoleranzen der Verbindungsmechanismen über die gesamte Bauteilgröße präzise eingehalten werden, kann vermieden werden, dass die Kanten teilweise versetzt sind oder es zu Differenzen in der Höhe des Nahtrandes kommt.

Das bedeutet wiederum, dass die Formteilrandbereiche für die Realisierung der in WO9740980 beschriebenen Lösung sehr präzise gefertigt werden müssen. Diese Forderung schlägt sich in höheren Werkzeugkosten und höheren Betriebskosten nieder. Zudem werden die Anforderungen an die Aufhängung der Formteile höher, da nicht nur ein Formteil in einer Rahmenkonstruktion positioniert werden muss, sondern . eine ganze Anzahl von Formteilen. Wenn diese Formteile grossflächig sind und selbst starken Temperaturschwankungen ausgesetzt sind, sind Winkelversetzungen und dadurch bedingte, unterschiedlich weit aufklaffende Spalte eine Folge, selbst wenn die Rahmenkonstruktion durch die Einhaltung genauer Toleranzmasse eine genaue Montage der Formteile zueinander erlauben würde.

WO9426500 beschreibt im Tiefziehverfahren hergestellte mehrfarbige Formteile.

Diese Formteile werden aufgeheizt, wodurch es zu einer Verbindung der Säume kommt. Allerdings wird nicht offenbart ob diese Verbindung einem weiteren Verarbeitungsschritt, wie beispielsweise einem Schäumprözeß unterzogen wird, demnach ist es auch nicht erforderlich, an die Dichtigkeit oder die Oberflächenqualität der Säume besondere Anforderungen zu stellen.

In US3654013 werden zwei durch Verschweißung miteinander verbundene Formhäute hinterschäumt. Die beiden Formhäute werden auf ein Fügewerkzeug gelegt, welches die Abmessungen der Formhäute haben muss, da es durch die Verschweißung und die damit verbundene lokale Temperaturveränderung zu Spannungen in den Formhäuten kommt, welche Veränderungen der Oberfläche, Verzug oder ein Reißen der Formhäute zur Folge hätten.: Für Formhäute mit komplexen Formen sind zur Realiserung eines spannungsfreien Fügevorgangs somit aufwändige Fügwerkzeuge erforderlich. Um eine Verschweißung durchzuführen, ist neben der Aufheizung auch ein nicht näher definierter Preßdruck erforderlich, was die Konstruktion von beheizbaren und beweglichen Fügwerkzeugen mit einem genauen Abbild der Kontur der Formhaut erforderlich macht.

Ein anderer Weg wird in US4610620 vorgeschlagen. Zwei Formhäute verschiedener Farbe werden im Slushverfahren parallel zueinander hergestellt. Dieses Verfahren ist vor allem für Formhäute interessant, welche gleiche Temperaturbedingungen im Slushverfahren benötigen. Andernfalls müssen für die Galvanohälften zwei unterschiedliche Heizkreisläufe verwendet werden, was nicht nur zu einer Erhöhung der Werkzeugkosten, aber auch zu Wärmeübergang über das aus wärmeleitfähigem Material hergestellte Galvano führt und somit die Temperaturregelung für die beiden Hälften wesentlich aufwändiger gestaltet. Da eine Formhaut im Slushverfahren ohnehin die Ausformung enthält, welche sich dann auf dem Formteil wiederfindet, ist die Koppelung zweier Galvanos nicht unbedingt vorteilhaft für die Formteilherstellung. Zudem wird die Gesamtfläche des Galvanos größer, was konstruktiv aufwändigere Rahmenkonstruktionen und Lagerungen bedeutet, da Galvanos zusammen mit den Pulverkästen Translations- und/ oder Rotationsbewegungen ausführen.

In der US4610620 wird zudem nur auf Formhäute eingegangen, welche über eine Verbindungsfolie verfügen, was stark vereinfacht einer Ausführung entspricht, bei welcher zwei Formhäute durch einen Klebestreifen verbunden werden. Es handelt sich bei dem Verbindungsstreifen um einen Streifen, welcher aus einer gemeinsamen Farbe besteht und durch Verschmelzung mit den beiden Formhäuten eine Einheit bilden soll. Das bedeutet allerdings, dass es keine scharfe Trennlinie zwischen den verschiedenen Farben gibt, was den Anforderungen an den optischen Eindruck einer klaren, eindeutigen, als feine Linie ausgebildeten nahtartigen Trennung der Bereiche unterschiedlicher Farbe oder Oberflächenbeschaffenheit oder Materials nicht entspricht.

Eine weitere Lösung wird in JP04085010 offenbart. In diesem Verfahren werden zwei Formhäute unterschiedlicher Zusammensetzung separat hinterschäumt. Dabei entsteht ein flexibles Formteil aus PVC-Formhaut und geslushtem PVC-Schaum und ein weiteres flexibles Formteil bestehend aus einer textilen Oberfläche, welche mit Polyurethan oder ähnlichem hinterschäumt wird. Diese beiden Formteile werden durch einen Nähvorgang miteinander verbunden und dann mit einer weiteren Schicht 22, welche nicht näher ausgeführt ist, hinterspritzt, hinterschäumt oder verklebt. Es muss aber offensichtlich eine Schicht gewählt werden, die bestimmten Dichteanforderungen entspricht, damit es nicht zum Durchtritt des Schichtmaterials durch die Nahtstellen kommt. Wie die Zeichnungen zeigen, werden, keine speziellen Anforderungen an die Nahtgeometrie gestellt, wodurch man sich aber in der Auswahl des Schichtmaterials für Schicht 22 beschränken muss.

Zwei oder mehrere verschiedenartige Folien bestehend aus zwei oder mehreren verschiedenen Färben und Oberflächen werden im Slushverfahren hergestellt. Im sogenannten Slushverfahren wird Polymerpulver in eine Negativform, die sogenannte Galvanoform eingebracht. Durch Beheizung der Form beginnt das Pulver in nächster Nähe zur Galvanoform zu versintem. Die Schichtdicke kann durch Temperatursteuerung der Heizung und der Dauer der Beheizung genau eingestellt werden. Mit diesem Verfahren können beliebige Oberflächengeometrien realisiert werden und jede Folie kann nach der Entformung aus dem Slushwerkzeug hinterschäumt werden oder auch mit einem Träger direkt durch einen Klebevorgang oder einen Pressvorgang aufkaschiert werden.

Die Formhäute werden mit der Sichtseite in das Fügwerkzeug eingelegt um den Fügvorgang gleich im Fügwerkzeug selbst durchzuführen. Die beiden Folien wurden schon wahrend oder kurz nach Abschluss des Slushverfahrensschritts an der Fügstelle so aufgebogen, dass die zu fügenden Ränder öder eine Positivform und eine entsprechende Negativform bilden. Wenn die Folien dann gemeinsam in das Fügwqrkzeug eingelegt wurden, kommen die aufgebogenen Ränder der Säume an der Sichtseite aufeinander zu liegen und bilden eine flächige Verbindung über den gesamten Verlauf der Foliennaht oder des Foliensaums. Die beiden Säume werden erfindungsgemäß im Fügwerkzeug formschlüssig verbunden, was nichts anderes bedeutet, als dass die Positivform eines Saums in die Negativform des jeweils gegenüberliegenden Saums eingreift und die Säume eine Nut-Federverbindung eingehen. Die Säume haben dazu mindestens eine Ausbuchtung und einen zugehörigen Hohlraum, der wie eine Negativform genau den Abmessungen der Ausbuchtung angepasst ist. Ein wesentlicher Vorteil dieser Ausführung ist die Möglichkeit, die Folie spannungsfrei zu fügen. Werden nämlich Zugkräfte in die Folie eingeleitet, dann reißt die Folie. Ein weiterer Vorteil dieser Ausführung ist die Tatsache, dass der Fügvorgang der beiden Säume nicht auf der Sichtseite der Folie durchgeführt wird.

Zusätzlich zu der erwähnten formschlüssigen Verbindung von Positivform und Negativform können eine große Anzahl an Fügverfahren zum Einsatz kommen, Verschweißen, Verkleben, mechanische Verbindungen, Klemmverbindungen und ähnliches, die dann allerdings nicht der Nahtausbildung dienen, sondern einer eventuell notwendigen zusätzlichen Sicherung gegen eine Verschiebung der relativen Position der Formhäute zueinander. Das Vorsehen eines Formschlusses in der Fügstelle, das heißt entlang des Querschnitts der beiden Säume, garantiert auch die Dichtigkeit der Fügstelle noch nicht, diese wird gemäß der erfinderischen Lehre durch den oder die folgenden Prozessschritte erreicht.

Im folgenden Prozessschritt wird die gefügte Folie entweder aus dem Fügwerkzeug entnommen oder gleich im Fügwerkzeug weiterverarbeitet. Nach einer ersten Verfahrensvariante findet ein Hinterschäumen der Folie statt. In einer weiteren Verfahrensvariante wird die Folie hinterspritzt. Aus diesem Grund muss die Fügstelle eine so geringe Durchlässigkeit für ein zähflüssiges Schaummaterial oder ein Spritzgießmaterial haben, um einen Übertritt des flüssigen Polymerschaums auf die Sichtseite auszuschließen. Damit bleibt die Fügstelle sauber und jede Verunreinigung auf der Sichtseite kann vermieden werden.Ziel der Erfindung ist daher verschiedene Oberflächen (Folien, Formhäute, Textilien, Leder, Stoffe etc..) in einem Fügwerkzeug fügen (eventuell auch im Schäumwerkzeug) und dann mit einem Träger zu verschäumen.

Diese Aufgabe wird erfindungsgemäß durch die folgenden technischen Merkmale gelöst:

In einem Verfahren zur Herstellung eines Formteils aus mehrteiligen Formhäuten zur Erzeugung einer dekorativen Oberfläche auf besagtem Formteil, welches mindestens eine Schaumschicht und eine Trägerschicht enthält besitzen die Formhäute relativ zu ihrer Dicke große Längen- und Breitenabmessungen. Die Formhäute weisen eine Sichtseite und eine dem Betrachter abgewandte Seite auf, wobei die Formhaute auf der dem Betrachter abgewandten Seite mindestens, eine, bereits bei der Herstellung der Formhaut vorgesehene Fügstelle aufweisen. Je zwei Formhäute werden mit ihren Fügstellen so in einem Fügwerkzeug positioniert, dass die Fügstellen einander gegenüberliegen und jede Fügstelle über mindestens eine Umlenkung verfügt, welche in eine gegenüberliegende Umlenkung eingreift, wobei gegenüberliegende Umlenkungen als Positivform und zugehörige Negativform ausgebildet sind und diese Fügstelle hinterschäumt oder hinterspritzt wird, wobei der Schaum oder das zur Hinterspritzung verwendete Polymer nur teilweise in den Zwischenraum zwischen die Positivform und die Negativform eindringt.

Mindestens eine der Formhäute kann durch das Slushverfahren als Slushhaut oder Doppelslushhaut hergestellt worden sein, oder es kann sich beispielsweise um eine .Gieß- oder Sprühhäut handeln.

Der in den Zwischenraum eindringende Schaum dringt als Flüssigkeit in den Zwischenraum ein. Der Zwischenraum hat die Form eines Labyrinths.Der Abstand zwischen den Umlenkungen ist kleiner als der Durchmesser eines sich im Schaummaterial beim Schäumen ausbildenden Höhlraumes. Bei dem Hohlraum handelt es sich um eine Blase, welche im Zwischenraum zwischen Positivform und Negativform kollabiert. Durch die Kollabierung kommt es zu einer Verklebung des Zwischenraums zwischen Positivform und Negativform. Durch die Verklebung wird verhindert, dass Schaummaterial weiter als bis zur ersten Umlenkung gelangt. Je zwei Formhäute können an der Fügstelle miteinander verschweißt werden, durch eine Steckverbindung verbunden werden, oder vernäht werden, bevor die Formhäute hinterschäumt oder hinterspritzt werden.

Ein Vorteil der Erfindung ist die Herstellung von mindestens zwei Formhäuten in ihrer Endkontur im Slushverfahren. Diese Formhäute können spannungsfrei gefügt werden. Ein weiterer Vorteil der Erfindung ist die Ausführung der Säume der Formhäute als Positivform und zugehörige Negativform, dass sie wie eine Nut- und Federsteckverbindung formschlüssig gefügt werden können.

Ein weiterer Vorteil der Erfindung ist die Möglichkeit der Realisierung von kleinen und exakten Spalt- und Fugenbildern bzw. Fugenmaßen auch über komplexe Kontüren, wie sie beispielsweise für eine Schalttafel eines Fahrzeuges oder eine andere beliebige Innenverkleidung benötigt werden.

Ein weiterer Vorteil ist die verbesserte Haltbarkeit der Fugen im Alterungsprozess, da die Folien zum Schwinden neigen und sich die Fuge aufweiten kann, weil die beiden Säume an einer Oberfläche entlang gleiten können, die im wesentlichen parallel zur Oberfläche der Formhäute ist. Durch diese Gleitbewegung öffnet sich der Spalt zwischen den beiden Säumen. Da aber die Gleitfläche aus demselben Material wie einer der beiden- Säume besteht und es keine Verbindung zwischen den Gleitflächen auf der Sichtseite gibt, wird durch die Freilegung dieser Gleitfläche der optische Eindruck nicht gestört.

Diese gefügten Oberflächen können auch direkt hinterspritzt werden. Als Trägermaterialien kommen Trägerkörper aus Presspappe, Schaumkunststoff, Spritzgussteile oder faserverstärkte Trägermaterialien in Frage.

Die Erfindung kann bei allen sichtbaren Teilen im Fahrzeuginnenraum nutzbringend verwendet werden. Allerdings soll sie nicht auf diese bevorzugte Anwendung beschränkt bleiben, es ist auch vorstellbar Möbel, Haushaltsgeräte, elektronische Geräte aller Art, Büroeinrichtung mit mehrfarbigen Formhäuten zu kaschieren. Die Erfindung bietet durch die Möglichkeit, auch komplizierte Oberflächenformen praktisch spannungsfrei zu fügen, eine weitgehende Freiheit in der optischen Gestaltung der Formteile, welche aus mehrfarbigen Formhäuten oder aus Formhäuten unterschiedlicher Material- oder Oberflächenbeschaffenheit bestehen.
Fig. 1a-f stellt schematisch die Herstellung von Formhäuten im Slushvorgang dar.
Fig. 2 stellt die Entnahme der Formhäute aus dem Slushwerkzeüg und die Einlage in ein Fügwerkzeug dar.
Fig. 3a stellt einen Fügvorgang durch Verklebung nach dem Stand der Technik dar.
Fig. 3b stellt einen Fügvorgang mit nachträglicher Verklebung dar.
Fig. 4a stellt einen Fügvorgang durch Verschweißen nach dem Stand der Technik dar.
Fig. 4b stellt einen Fügvorgang mit nachträglichem Verschweißen dar.
Fig. 5a und Fig. 5b stellen Lösungen von genähten Fügverbindungen für Formhäute nach dem Stand der Technik dar.
Fig. 5c stellt eine Lösung einer genähten Fügverbindung für Formhäute dar.
Fig. 6, stellt den Fügvorgang durch eine Steckverbindung nach dem Stand der Technik dar.
Fig. 7a, 7b stellen den Fügvorgang mit nachträglicher Verbindung durch eine Steckverbindung dar.
Fig. 8 stellt den ersten Schritt des Hinterschäumens einer gefügten Folie dar.
Fig. 9 stellt den zweiten Schritt des Hinterschäumens einer gefügten Folie dar, in welcher der Schaum mit dem Trägermaterial verbunden wird.
Fig. 10a stellt eine bevorzugte Ausführung der Fügverbindung vor der Hinterschäumung mit einem Träger dar.
Fig. 10b stellt eine bevorzugte Ausführung der Fügverbindung nach der Hinterschäumung mit einem Träger dar.

Zwei verschiedene Folien(1,2) werden in nach dem Slushverfahren erzeugt. Dazu wird für wird jede Folie ein eigenes Slushwerkzeug 3 bereitgestellt. Das Pulver wird mit dem Pulverkasten 4 in das Slushwerkzeug 3 eingebracht. Durch Schwenk- und/oder Drehbewegungen wird das Pulver gleichmäßig über die Slushwerkzeugoberfläche verteilt. Durch kontrollierte Beheizung 5 des Slushwerkzeuges versintert das Pulver in einer Schicht von genau definierter Dicke.

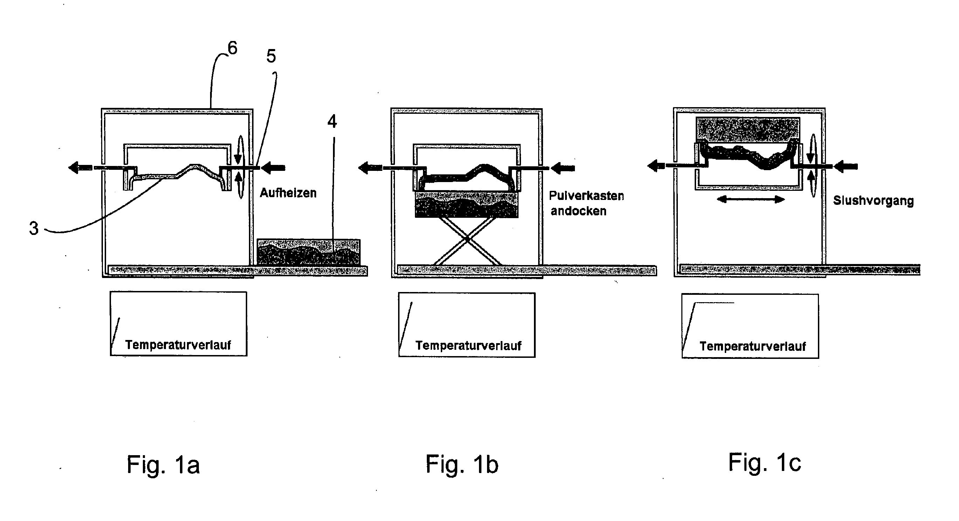

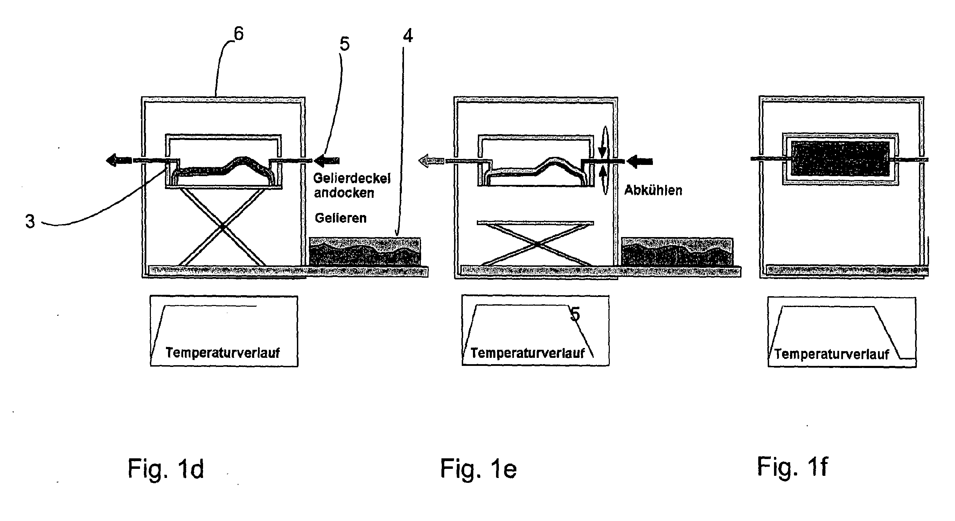

Fig. 1a - Fig. 1f stellen die Prozessfolge für das Slushverfahren dar. Der erste Prozessschritt nach Fig. 1a stellt das Vorheizen des Slushwerkzeugs 3 dar. Das Slushwerkzeug 3 ist drehbar in der Abdeckung 6, die gleichzeitig als Maschinengehäuse ausgeführt sein kann, gelagert. Der Pulverkasten wird parallel dazu auf seinen Einsatz vorbereitet. Die Füllung mit Pulver erfolgt in einem separaten Verfahrensschritt, um eine vorzeitige Erwärmung des Pulvers zu vermeiden. Die Beheizung erfolgt durch eine Ölheizung mit Temperaturregelung. Zur Regelung der Temperatur werden Behälter mit Öl bei Prozesstemperatur und Behälter mit einer von der Prozesstemperatur abweichenden Temperatur bereitgestellt. Die Ölmengen werden anteilsmäßig beispielsweise durch Ventilsteuerung zugeführt. Dazu sind in den Leitungen, die zum Slushwerkzeug führen und in den Behältern selbst Temperatursensoren angebracht. Die Durchsatzmengen an heißem oder kaltem Öl zur Bildung einer Mischung werden naöh einer Kalibrierung, die in einer Programmeinheit abgespeichert ist und von dieser Kontrölleinheit vorzugsweise elektronisch angesteuert wird, den gewünschten Temperaturwerten zugeordnet.

Wenn die Vorheizperiode abgeschlossen ist, wird, wie in Fig. 1b schematisch dargestellt, der Pulverkasten 4 an das Slushwerkzeug angedockt. Befestigungsmittel sichern den angedockten Pulverkasten am Slushwerkzeug. Das Slushwerkzeug und der Pulverkasten werden nun, wie in Fig. 1c dargestellt, translatorisch bewegt und gleichzeitig oder abwechselnd einer Rotationsbewegung unterworfen. Das Slushwerkzeug wird dabei auf Prozesstemperatur gehalten. Das Pulver beginnt an der Oberfläche des Slushwerkzeugs zu haften, da es versintert. Je nach Dauer des Slushvorgangs beginnen weitere Pulverschichten zu versintern, bis die gewünschte Foliendicke erreicht ist.

Dann wird wie in Fig. 1d gezeigt wird, der Pulverkasten wieder vom Slushwerkzeug entkoppelt und unter Beibehaltung der Prozesstemperatur ein Gelierdeckel angedockt. Mit diesem Prozessschritt kann der Grad der Versinterung der Partikel genau gesteuert werden und eine homogene Folienoberfläche und Folienstruktur erreicht werden. Nach dem Gelieren wird das Slushwerkzeug gekühlt, beispielsweise durch eine Spülung der Form mit mäßig temperierten und dann kalten Öl.

Im letzten Prozessschritt wird das Slushwerkzeug so positioniert, dass die Folie manuell oder durch Roboterunterstützung entnommen werden kann.

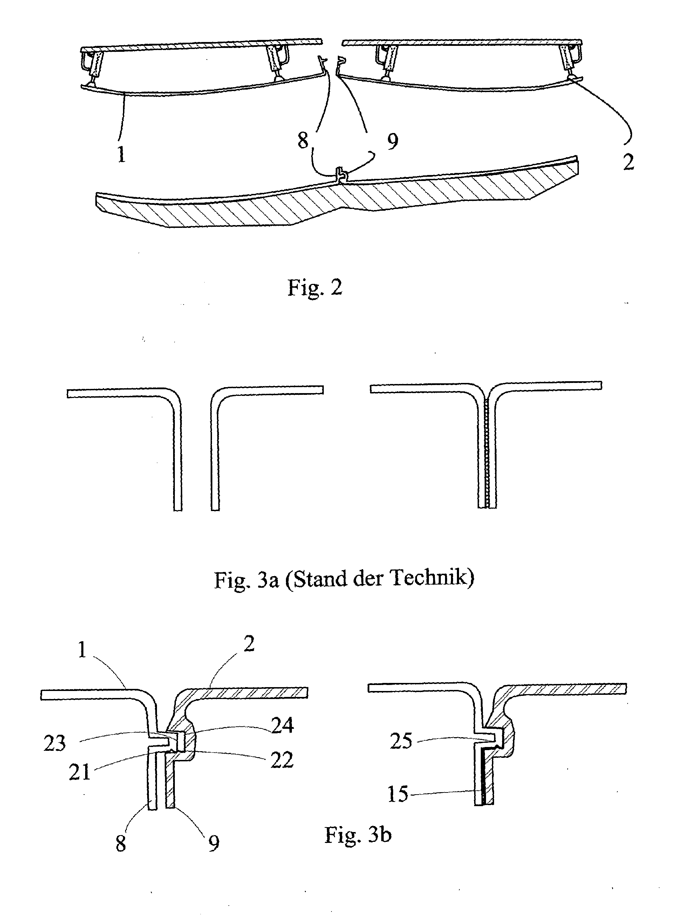

In Fig. 2 wird das Einlegen der entnommenen Slushhaut in ein Fügwerkzeug 10 dargestellt. Die Slushhaut wird von einem Entnahmewerkzeug 7 Trans'portiert und in der Fügform positioniert. Falls nötig, können im Transportweg noch weitere Stationen enthalten sein, so beispielsweise eine Kleberauftragsstation oder eine Heizstation.

In diesen Stationen werden die Säume 8,9 beschichtet oder aufgeheizt und so auf den eigentlichen Fügvorgang vorbereitet. Alternativ dazu kann der Fügvorgang vor der Wärmebehandlung, Verschweißung oder Verwendung eines mechanischen Verbindungsmittels durchgeführt werden. Insbesondere sind die Säume mit Umlenkungen versehen, die zu einem Ineinandergreifen oder Einrasten der besagten Säume führen. Für kleine Stückzahlen kann auch statt des Entnahmewerkzeugs ein Handarbeitsplatz vorgesehen werden.

Fig. 3a und 3b stellen einen Fügvorgang durch Verklebung dar. In diesem Fall sind die Säume entweder bereits vor dem Fügvorgang mit einem Klebemittel beschichtet oder das Klebemittel wird in einen Spalt in flüssiger oder zähflüssiger Form eingebracht. Fig. 3a stellt den Fügvorgang nach dem Stand der Technik schematisch dar. Vorteilhafterweise sind die Säume (8,9) nach Fig. 3b mit Umlenkungen versehen, welche einer Positivform 23 und einer Negativform 24 entsprechen. Zusätzlich können mindestens ein Vorsprung 21 auf der Positivform 23 und ein Hohlraum 22 auf der Negativform vorgesehen sein, die einen Rastmechanismus bilden. Alternativ dazu kann der Vorsprung auf der Positivform auch als Presspassung ausgeführt sein. Durch den dargestellten Einschnitt 25 welcher in Fig. 3b als Nut ausgeführt ist, können die beiden, die Positivform bildenden Folienteile gegeneinander verschoben werden.

Durch die elastischen Eigenschaften der Folienteile können sie einfach zusammengepreßt werden und in die Negativform eingeschoben werden. Wenn keine Rastverbindung beabsichtigt ist oder Gefahr besteht, dass die Rastverbindung sich beim Einlegen in das Schäum- oder Spritzgießwerkzeug löst, kann Klebemittel auf die Flächen (26, 27) aufgetragen werden. Das Labyrinth, welches durch die Passung von Positivform und Negativform entsteht, verhindert dabei, dass Klebemittel von der Klebestelle 15 auf die Sichtseite der Folie gelangt und den optischen Eindruck durch Unsauberkeit der Nahtstellen durch Klebemittelreste nachteilig beeinflusst. Die Umlenkungen bilden ein Labyrinth, durch welches das Klebemittel aufgrund seiner zähflüssigen Konsistenz oder der Oberflächenspannung im Spalt nicht bis zur Sichtseite gelangen kann.

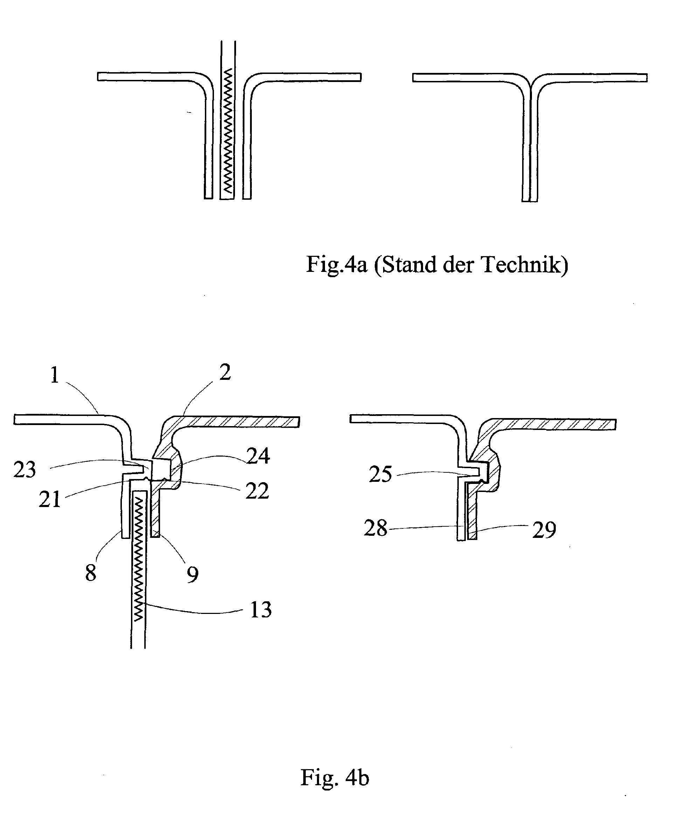

Fig. 4a und Fig. 4b stellen einen Fügvorgang durch Verschweißen durch vorherige Beheizung dar. Fig. 4a stellt dabei eine aus dem Stand der Technik bekannte Lösung dar.

Bevor die beiden Säume gefügt werden können, werden sie durch ein Heizelement beheizt. Prinzipiell wäre auch eine Beheizung der beiden Folien nach der Fügung denkbar, wenn die Position der Säume zueinander fixiert ist. Auch hier wird zur Fixierung der Position der Formhäute zueinander nach Fig. 4b ein Labyrinth vorgesehen. Wenn zur Verschweißung der Säume die Enden der Säume (28,29) vorgeheizt werden müssen, ist zu beachten, dass es nicht zu einem Verzug der beiden Formhäute kommt. Daher werden die Enden nur teilweise vorgeheizt. Dieser Verfahrensschritt kann notwendig sein, wenn die Haltekraft der Fügstelle nicht ausreicht und Gefahr besteht, dass die Formhäute sich gegeneinander verschieben oder sogar aus dem Rastmechanismus teilweise ausrasten. Dies sollte bei Einlage in ein Schäumwerkzeug nicht der Fall sein, allerdings werden die Enden der Säume (28,29) oft gekürzt, wobei die Formhäute durch ein Schneidwerkzeug geführt werden müssen. Die Länge soll 3 bis 5 mm nicht übersteigen. Sie ist abhängig von der Dicke und der Verteilung der Schaumschicht. Unter Umständen muss für jede der Folien eine eigene Schaumzufuhr vorgesehen werden, da sonst die aufstehenden Säume eine gleichmäßige Verteilung des flüssigen Schaummittels verhindern.

Alternativ zu einer Erwärmung der Folien im Fügbereich können die Säume durch Hochfrequenzschweißen (HF-Schweißen) verbunden werden. Nicht alle Kunststoffe eignen sich für dieses Verfahren. Die chemischen Bindungen müssen durch die Frequenz der eingebrachten Schwingung angeregt werden und selbst in Schwingungen versetzt werden. Diese Schwingungen bedeuten den Eintrag von Wärmeenergie in das Kunststoffmaterial, was auch dazu führen kann, dass Bindungen aufgebrochen und mit dem Gegenteil, also in diesem Fall dem Saum, eine Bindung eingehen. Dadurch kommt es zur Verbindung der beiden Säume ohne Verwendung eines Bindemittels oder eines Klebers. Eine häufig verwendete Kennzahl für die HF-Schweißbarkeit eines Kunststoffes ist der dielektrische Verlustfaktor tan(delta).

Wenn der dielektrische Verlustfaktor tan(delta) größer al 0,1 ist, kann der Kunststoff einfach durch hochfrequente Strahlung erwärmt werden. Bei dielektrischen Verlustfaktoren zwischen 0,1 und 0,01 ist die Erwärmung noch möglich, darunter ausgeschlossen, außer unter der Verwendung von Zusätzen, die wiederum zur Erhöhung des dielektrischen Verlustfaktors führen. Prinzipiell können die Kunststoffe Polyvinylchlorid (PVG), Polyurethan (PU), Ethylenvinylacetat (EVAC), Polyamid (PA) Polyethylenterephthalat (PET), Polyvinylidenfluorid (PVDF, Polyvinylfluorid (PVF) mittels einer HF-Schweißung gefügt werden. Weitere HF-schweißbare Kunststoffe sind thermoplastische Elastomere (TPA, TPS), Acrylnitril/Butadien/Styrol (ABS) Polymethylmethacrylat (PMMA), Ethylen/Propylen-Dien (EPDM), Celluloseacetat (CA), Cellulosecetobutyrat (CAB), Cellulosepropionat (CP) oder Kunststoffe, welche die vorhergehend genannten Materialien in einem bestimmten Prozentsatz enthalten.

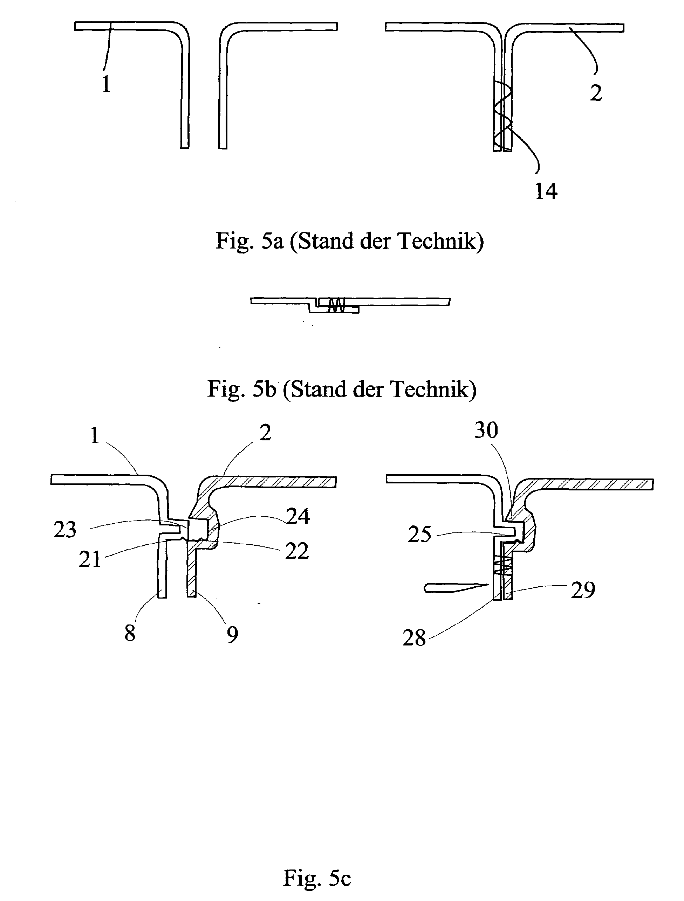

Fig. 5a und Fig. 5b stellen Varianten dar, in welchen eine Naht 14 als Verbindungselement verwendet wird. Fig. 5a zeigt eine herkömmliche Methode der Verbindung von 2 Säumen, wobei zwar die Naht unsichtbar bleibt, aber nicht garantiert werden kann, dass Schaummaterial auf die Sichtseite hindurchtritt. Eine Lösung zur Erreichung der Dichtigkeit besteht darin, die Enden der Säume mit einer zusätzlichen Schicht abzudecken, die mit den Säumen auf der unsichtbaren Seite der Folie vernäht wird, ähnlich wie in JP04085010. Die Verarbeitungstechnik ist aber sehr autwändig, vor allem, wenn Teile großer Länge und mit beliebigem räumlichen Verlauf der Naht bearbeitet werden müssen. Die Positionierung des Nähwerkzeugs macht das Verfahren in der Praxis wahrscheinlich sehr teuer, weil für großflächige, dreidimensionale Formhäute eine relativ aufwändige Programmierung und Einstellung der Nähwerkzeuge erforderlich ist.

In Fig. 5b wird eine verarbeitungsfreundlichere Lösung für eine Naht nach dem Stand der Technik gezeigt. Allerdings hat man mit dieser Lösung das Problem, dass im Bereich der Durchstiche Schaummaterial austreten kann, die Naht also nicht dicht ist.

Eine Möglichkeit der Abdichtung der Nahtstellen erfolgt dann in einem zusätzlichen Arbeitsgang zwischen Fügvorgang und Schäumen durch ein Klebeband oder dem Auftrag einer Klebesubstanz, die eine Verfestigung oder Aushärtung des Schaummaterials bewirkt.

In Fig. 5c ist die Variante einer Naht nach der Lehre der Erfindung gezeigt. Wieder werden die beiden Folien teilweise überläppend angeordnet. Dadurch wird einerseits das oben beschriebene Labyrinth erzeugt, andererseits hat eine Überlappung, wie in dieser und anderen Figuren gezeigt wird, die Folge, dass es zu einer Verschiebung der einen Folie relativ zu der anderen Folie kommen kann, ohne dass ein Abmaß sichtbar wird. Diese Verschiebung erfolgt ungefähr entlang der Horizontalrichtung in der Fig. 5c entlang der oberen Ebene 30 der Umlenkung 23. Die Toleranzen werden durch das formschlüssige Fügen in der Labyrinthform gewährleistet. Kommt es beispielsweise durch Materialalterung zum Schwinden des Folienmaterials und daher zu einer Vergrößerung des Spalts, bleibt diese Veränderung der Spaltbreite dem Betrachter verborgen. Die Position der beiden unterschiedlichen Folien verschiebt sich zwar, aber an der Kante selbst wird keine Klaffung sichtbar.

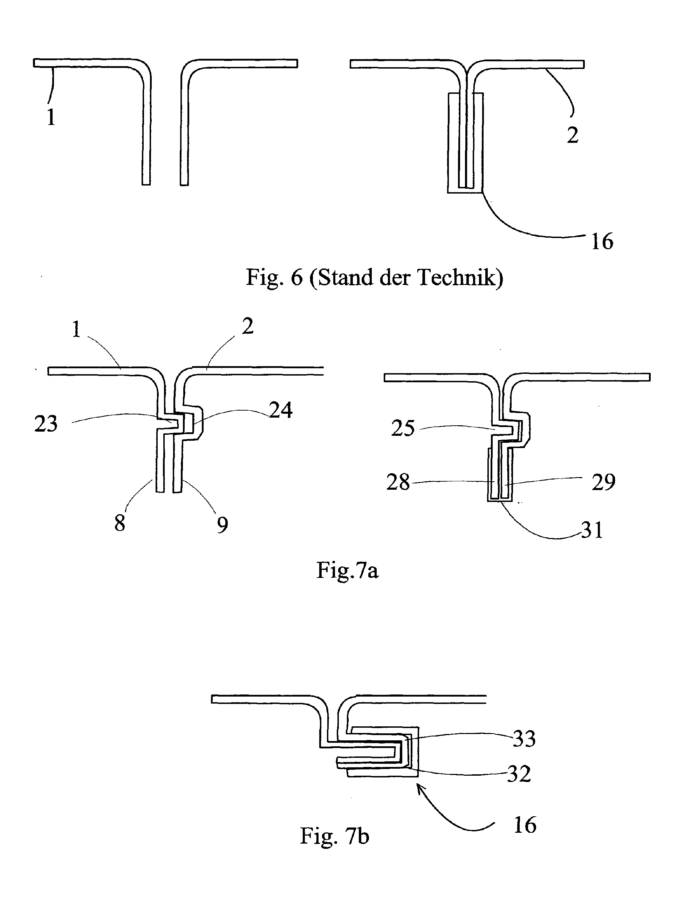

Fig. 6, 7a, 7b stellen den Fügvorgang durch eine Steckverbindung 16 mit einem zusätzlichen Steckelement 31 dar. Eine derartige Steckverbindung funktioniert nach dem Nut-Federprinzip. Wieder wird eine labyrinthartige Struktur vorgegeben, wobei es neben dem Einrastmechanismus, welcher aus Umlenkung 23 und zugehöriger Negativform 24 besteht, in gleicher Weise zu einer Klemmwirkung zwischen der Nut 32 und der Feder 33 kommt. Diese Variante hat den Vorteil, dass die Folien schon in verbundener Form in das Schaumwerkzeug eingelegt werden können.

Da die Nut-Federkombination eine Labyrinthstruktur bildet, dichtet sie durch den oben beschriebenen Kollabierungseffekt automatisch.

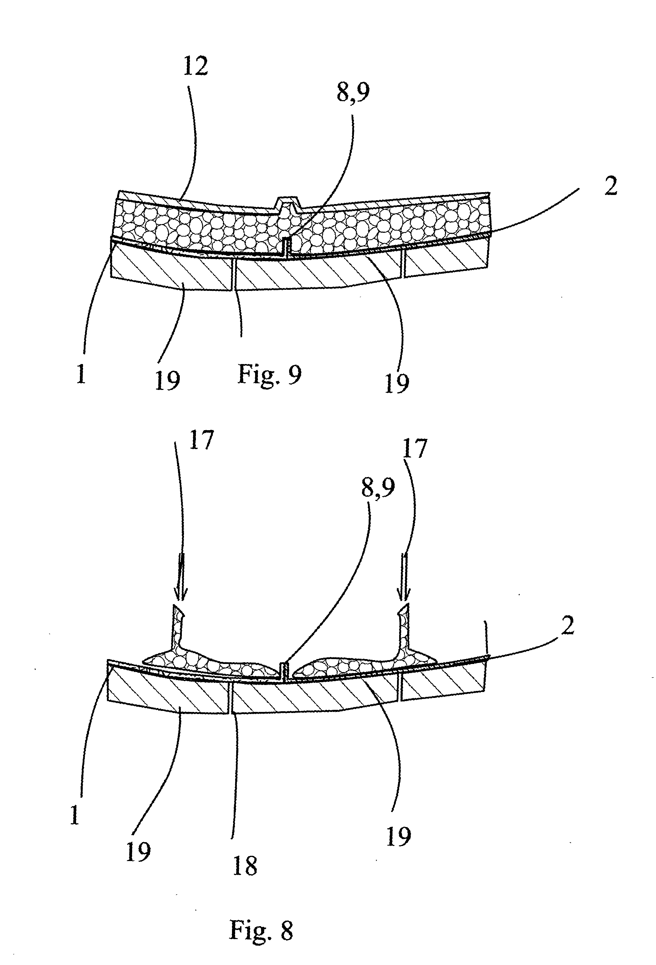

Fig. 8 stellt schematisch den Schäumprozess dar. Die beiden in das Schäumwerkzeug eingelegten Folien werden mit flüssigem Schaum übergossen. Durch das Treibmittel in der Schaumflüssigkeit beginnt die Bildung von Hohlräumen im Schaummaterial, die das Aufquellen des Schaummateriäls und die eigentliche Schaumbildung zur Folge haben. In Fig. 8 soll das Schäumen im offenen Werkzeug dargestellt werden. Der Schaum wird über Zufuhrleitungen 17 eingetragen, verschäumt mit der Folie und dem Träger, sodass sich eine Schaumschicht von einigen mm Dicke ergibt. Die mit 18 bezeichneten Kanäle stellen optionale Absaugvorrichtungen dar, um die Folie in Position zu halten. Mit 19 wird die Wand des Schäumwerkzeugs bezeichnet, das aber mit dem Fügwerkzeug identisch sein kann.

Fig: 9 stellt die Verbindung des Schaums mit dem Träger dar. Zu beachten ist, dass eine Mindestschaumdicke nicht unterschritten wird, um den obengenannten Kollabierungseffekt, der im Labyrinth mit Vorteil verwendet wurde, zu vermeiden.

Daher ist im Trägermaterial 12 eine Ausnehmung 20 enthalten, dieim Bereich der Fügstelle einen Übergang für das Schäummaterial darstellt.

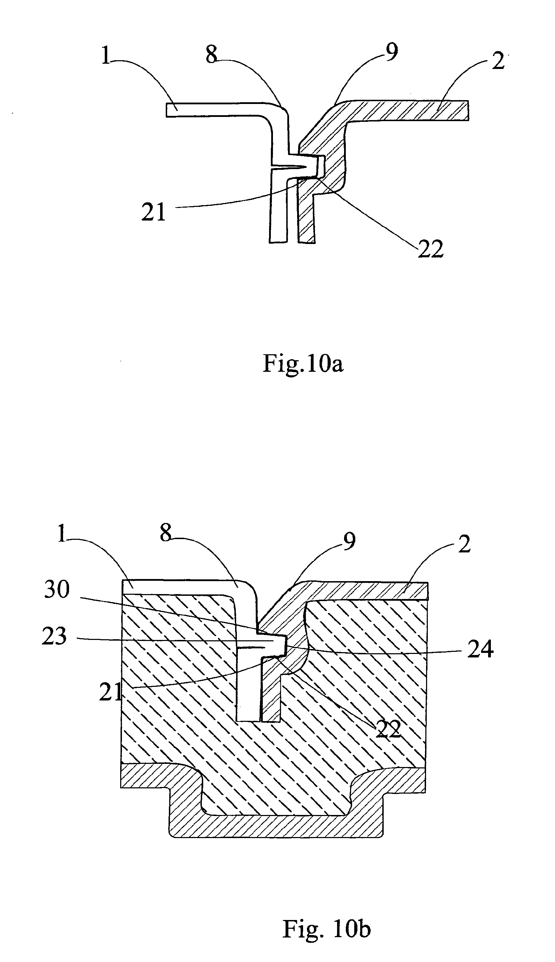

Fig. 10a stellt eine bevorzugte Ausführung der Fügverbindung vor der Hinterschäumung mit einem Träger dar. Deutlich ist ein Vorsprung 21 in dem in der Zeichnung links liegenden Saum 8 zu erkennen, der in einen Hohlraum 22 in dem in der Zeichnung rechtsliegenden Saum 9 eingreift. Der Vorsprung hat in diesem Ausführungsbeispiel einen größeren Querschnitt als der zugehörige Hohlraum, sodass eine Steckverbindung realisiert wird. Diese Steckverbindung kann wie eine Knüpfleiste funktionieren, wie sie beispielsweise als Verschlussmechanismus für Kunststoffbeutel gebräuchlich ist. Zusätzlich kann in der Folie 8 eine Umlenkung 23 vorgesehen sein, welche eine Faltung des Folienmaterials ergibt. Auf der Unterseite dieser Umlenkung 23 befindet sich der Vorsprung 21. Diese Vorsprünge können entweder als durchgehende Leiste oder als Noppen ausgebildet sein, welche in zugehörige Hohlräume 22, welche als das der Form des Vorsprungs 21 entsprechende Negativprofil 24 im Saum 9 ausgebildet sind.

Beim Fügvorgang wird die Umlenkung 23 in das zugehörige Negativprofil 24 eingeführt

Die Schaumschicht sollte eine Mindestdicke nicht unterschreiten, da sonst das Schaummaterial kollabiert. Daher wird im Trägermaterial 12 eine Ausbuchtung im Bereich der Fügstelle vorgesehen. Würde der Abstand der Fügstelle vom Trägermaterial einen Mindestwert unterschreiten, käme es zum Kollabieren des Schaummaterials. Wenn der Abstand zwischen Träger und den Saumenden der Fügstelle so wird, dass der Durchmesser einer Blase erreicht wird, bleibt die Blase nicht bestehen, sondern kollabiert und verklebt. Dieser Effekt wird in der Ausführung des Labyrinths selbst genutzt. Das Schaummaterial dringt in den Spalt, der zwischen den Säumen besteht, ein. Durch die Querschnittsabnahme bis zur ersten Umlenkung verklebt das Schaummaterial und kann in keinem Fall durch die Umlenkung hindurchtreten und so zu einer Beeinträchtigung der Funktion oder der Ästhetik der sichtbaren Seite der Folien führen.

Diese hinterschäumte oder hinterspritzte Verbindung zwischen den Folien ist gegen Alterungseffekte, wie Schwiridungen beständig, da die Folien in der Naht entlang der oberen Ebene 30 gleiten können. Durch diese Gleitbewegung öffnet sich der Spalt zwischen den beiden Säumen. Da aber die Gleitfläche aus demselben Material wie einer der beiden Säume besteht und es keine Verbindung zwischen den Gleitflächen auf der Sichtseite gibt, wird durch die Freilegung dieser Gleitfläche der optische Eindruck nicht verändert.

In der Folge sollen noch einige bevorzugte Beispiele für zu verwendende Materialkombinationen gegeben werden, ohne aber die Auswahl auf die unten genannten Materialkombinationen in irgendeiner Weise zu beschränken.

Nach Beispiel 1 soll eine Schichtenfolge von PVC Kompaktschicht, PU Schaum und PP Träger dargestellt werden.

| Material | Dichte g/cm3 | Dicke mm | Flächengewicht in g/dm2 |
|---|---|---|---|
| PVC-Kompaktschicht | 1,25 | 1,1 | 13,75 |
| PU-Schaum | 0,17 | 6,0 | 10,2 |
| PP-Träger | 1,05 | 2,5 | 26,25 |

Nach Beispiel 2 soll eine Schichtenfolge von PVC Kompaktschicht, PVC - Schaum, PU Schaum und SMA Träger dargestellt werden.

| Material | Dichte g/cm3 | Dicke mm | Flächengewicht in g/dm2 |
|---|---|---|---|
| PVC-Kompaktschicht | 1,25 | 0,6 | 7,5 |
| PVC-Schaum | 0,6 | 0,6 | 3,6 |
| PU-Schaum | 0,17 | 6,0 | 10,2 |
| SMA-Träger | 1,17 | 2,2 | 25,7 |

Nach Beispiel 3 soll eine Schichtenfolge von TPO Kompaktschicht, TPO Haftschicht PU Schaum und PP Träger dargestellt werden.

| Material | Dichte g/cm3 | Dicke mm | Flächengewicht in g/dm2 |
|---|---|---|---|
| TPO-Kompaktschicht | 0,9 | 0,8 | 7,2 |
| TPÖ Haftschicht | 0,9 | 0,2 | 1,8 |
| PU-Schaum | 0,17 | 6,0 | 10,2 |
| PP-Träger | 1,05 | 2,5 | 26,25 |
| | | | |
| Gesamtflächengewicht | | | 45,45 |

Nach Beispiel 4 soll eine Schichtfolge von TPU Kompaktschicht, PU Schaum und SMA Träger dargestellt werden.

| Material | Dichte g/cm3 | Dicke mm | Flächengewicht in g/dm2 |
|---|---|---|---|
| TPU-Kompaktschicht | 1,15 | 0,8 | 9,2 |
| PU-Schaum | 0,17 | 6,0 | 10,2 |
| SMA-Träger | 1,17 | 2,2 | 25,7 |

### Bezugszeichenliste

- 1.: Folie
- 2.: Folie
- 3.: Slushwerkzeug
- 4.: Pulverkasten
- 5.: Temperatursteuerung
- 6.: Abdeckung und/der Gehäuse
- 7.: Entnahmewerkzeug
- 8.: Saum
- 9.: Saum
- 10.: Fügwerkzeug
- 11.: Umlenkung
- 12.: Trägermaterial
- 13.: Heizelement
- 14.: Naht
- 15.: Klebestelle
- 16.: Steckverbindung
- 17.: Zufuhrleitungen
- 18.: Absaugvorrichtungen
- 19.: Schaumwerkzeüg
- 20: Ausnehmung
- 21: Vorsprung
- 22: Hohlraum
- 23: Umlenkung (Positivform)
- 24: Negativform
- 25: Einschnitt
- 26: Klebefläche
- 27: Klebefläche
- 28: Endbereich Folie 1
- 29: Endbereich Folie 2
- 30: obere Ebene
- 31: Steckelement
- 32: Nut
- 33: Feder

## Patentansprüche

1. Verfahren zur Herstellung eines Formteils aus mehrteiligen Formhäuten zur Erzeugung einer dekorativen Oberfläche auf besagtem Formteil, welches mindestens eine Schaumschicht und eine Trägerschicht enthält, wobei die Formhäute relativ zu ihrer Dicke große Längen- und Breitenabmessungen besitzen und eine Sichtseite und eine dem Betrachter abgewandte Seite besitzen, wobei die Formhäute auf der dem Betrachter abgewandten Seite mindestens, eine, bereits bei der Herstellung der Formhaut vorgesehene Fügstelle aufweisen, **gekennzeichnet dadurch, dass** je zwei Formhäute mit ihren Fügstellen so in einem Fügwerkzeug positioniert werden, dass die Fügstellen einander gegenüberliegen und jede Fügstelle über mindestens eine Umlenkung verfügt, welche in eine gegenüberliegende Umlenkung eingreift, wobei gegenüberliegende Umlenkungen als Positivform und zugehörige Negativform ausgebildet sind und diese Fügstelle hinterschäumt oder hinterspritzt wird, wobei der Schaum oder das zur Hinterspritzung verwendete Polymer nur teilweise in den Zwischenraum zwischen die Positivform und die Negativform eindringt.

2. Verfahren nach Anspruch 1, **gekennzeichnet dadurch, dass** mindestens eine der Formhäute durch das Slushverfahren hergestellt wurde.

3. Verfahren nach Anspruch 1, **gekennzeichnet dadurch, dass** mindestens eine der Formhäute eine Gießhaut ist.

4. Verfahren nach Anspruch 1, **gekennzeichnet dadurch, dass** mindestens eine der Formhäute eine Sprühhaut ist.

5. Verfahren nach einem der vorhergehenden Ansprüche, **gekennzeichnet dadurch, dass** mindestens eine der Formhäute eine Doppelslushhaut ist.

6. Verfahren nach Anspruch 1, **gekennzeichnet dadurch, dass** der in den Zwischenraum eindringende Schaum als Flüssigkeit in den Zwischenraum eindringt.

7. Verfahren nach Ansprüchen 1 bis 3, **gekennzeichnet dadurch, dass** der Zwischenraum als Labyrinth ausgeführt ist.

8. Verfahren nach Anspruch 7, **gekennzeichnet dadurch, dass** das Labyrinth aus mindestens zwei Umlenkungen aufgebaut ist.

9. Verfahren nach einem der vorhergehenden Ansprüche, **gekennzeichnet dadurch, dass** der Abstand zwischen den Umlenkungen kleiner als der Durchmesser eines sich im Schaummaterial beim Schäumen ausbildenden Hohlraumes ist.

10. Verfahren nach Anspruch 5, **gekennzeichnet dadurch, dass** es sich bei dem Hohlraum um eine Blase handelt.

11. Verfahren nach Anspruch 6, **gekennzeichnet dadurch, dass** die Blase im Zwischenraum zwischen Positivform und Negativform kollabiert.

12. Verfahren nach Anspruch 7, **gekennzeichnet dadurch, dass** es durch die Kollabierung zu einer Verklebung des Zwischenraums zwischen Positivform und Negativform kommt.

13. Verfahren nach Anspruch 8, **gekennzeichnet dadurch, dass** durch die Verklebung verhindert wird, dass Schaummaterial weiter als bis zur ersten Umlenkung gelangt.

14. Verfahren nach Anspruch 1, **gekennzeichnet dadurch, dass** je zwei Formhäute an der Fügstelle miteinander verschweißt wurden, bevor die Formhäute hinterschäumt oder hinterspritzt werden.

15. Verfahren nach Anspruch 1, **gekennzeichnet dadurch, dass** je zwei Formhäute an der Fügstelle miteinander durch eine Steckverbindung verbunden wurden, bevor die Formhäute hinterschäumt oder hinterspritzt werden.

16. Verfahren nach Anspruch 1, **gekennzeichnet dadurch, dass** je zwei Formhäute an der Fügstelle vernäht wurden, bevor die Formhäute hinterschäumt oder hinterspritzt werden.

17. Kombination von mindestens zwei Formhäuten unterschiedlicher Farbe oder Zusammensetzung, wobei die Kombination der Formhäute gemeinsam hinterschäumt oder hinterspritzt ist, und jede der Formhäute einen Saum aufweist, welcher an den jeweils gegenüberliegenden Saum flächig anliegt, wobei die Säume untereinander eine formschlüssige Verbindung haben, wobei jeder der Säume mindestens eine Umlenkung aufweist, welche in eine gegenüberliegende Umlenkung eingreift, wobei gegenüberliegende Umlenkungen als Positivform und zugehörige Negativform ausgebildet sind, **gekennzeichnet dadurch, dass** der Zwischenraum zwischen Positivform und Negativform teilweise mit aufgeschäumtem, verfestigten Schaummaterial oder verfestigtem Polymer gefüllt ist.

18. Kombination nach Anspruch, **gekennzeichnet dadurch, dass** das verfestigte Schaummaterial oder das verfestigte Polymer den Zwischenraum nur bis zur ersten Umlenkung ausfüllen.
